# EUROPÄISCHE PATENTSCHRIFT

(11) **EP 2 006 668 B1**
(45) Veröffentlichungstag und Bekanntmachung des Hinweises auf die Patenterteilung: **07.05.2014**
(21) Anmeldenummer: 07012222.1
(22) Anmeldetag: 22.06.2007
(51) Int. Cl.: G01N 27/414, G01N 27/00

(54) **Gassensor**
Gas sensor
Capteur de gaz

(43) Veröffentlichungstag der Anmeldung: 24.12.2008
(73) Patentinhaber: Micronas GmbH, 79108 Freiburg i. Br. (DE)
(72) Erfinder: Wilbertz, Christoph, Gundelfingen (DE); Frerichs, Heinz-Peter, 79271 St. Peter (DE)
(74) Vertreter: Koch, Bertram

(56) Entgegenhaltungen:
- WO-A1-2005/075969
- DE-A1- 4 333 875
- DE-A1- 10 161 214
- US-A- 6 155 100
- JEYAPRAKASH J D ET AL: "A simple route towards the reduction of surface conductivity in gas sensor devices" SENSORS AND ACTUATORS B, ELSEVIER SEQUOIA S.A., LAUSANNE, CH, Bd. 110, Nr. 2, Oktober 2005 (2005-10), Seiten 218-224, XP002455894 ISSN: 0925-4005
- FLIETNER B ET AL: "Reliable hybrid GasFETs for work-function measurements with arbitrary materials" SENSORS AND ACTUATORS B, ELSEVIER SEQUOIA S.A., LAUSANNE, CH, Bd. 22, Nr. 2, November 1994 (1994-11), Seiten 109-113, XP004012433 ISSN: 0925-4005

## Beschreibung

Die Erfindung betrifft einen Gassensor nach dem Oberbegriff von Anspruch 1.

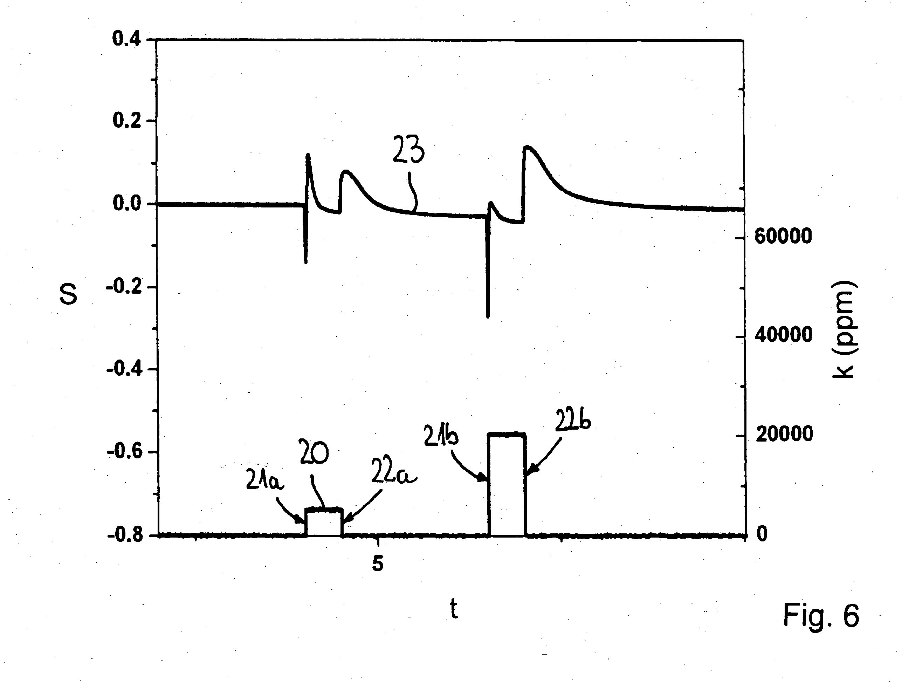

Ein derartiger Gassensor ist aus DE 43 33 875 C2 bekannt. Der Gassensor hat ein Silizium-Substrat, in das ein Feldeffekttransistor integriert ist. Der Feldeffekttransistor weist eine Gate-Elektrode auf, die leitend mit einer Sensorelektrode verbunden ist, über der eine gassensitive Schicht angeordnet ist, die durch einen Luftspalt von der Sensorelektrode beabstandet und über den Luftspalt kapazitiv an die Sensorelektrode gekoppelt ist. Auf die der Sensorelektrode abgewandte Rückseite der gassensitiven Schicht ist eine Deckelektrode aufgebracht. Ein der Sensorelektrode zugewandter Oberflächenbereich der gassensitiven Schicht ist mit einem Zielgas in Kontakt bringbar, das beim Kontaktieren das Oberflächenbereichs an diesen adsorbiert. Bei einer Änderung der Konzentration des Zielgases verändert sich die Austrittsarbeit in dem Oberflächenbereich der gassensitiven Schicht. Da die Sensorelektrode kapazitiv an den Oberflächenbereich gekoppelt ist, verändert sich dabei auch das elektrische Potential an der Gate-Elektrode. In Abhängigkeit von der Potentialänderung wird der Stromfluss zwischen einem Drain- und einem Source-Anschluss des Feldeffekttransistors gesteuert. Bei bestimmten Kombinationen von gassensitiver Schicht und Zielgas kann der Gassensor den Nachteil haben, dass das Messsignal des Feldeffekttransistors stark nichtlinear ist. Wie in Fig. 6 erkennbar ist, nimmt zum Beispiel bei einer sprungartigen Zunahme der Konzentration (K) des Zielgases das Messsignal (M) zunächst relativ schnell ab, um danach wieder bis über das Niveau, welches das Messsignal vor der Zunahme der Konzentration hatte, anzusteigen. Anschließend findet zunächst eine langsamere Abnahme des Messsignals, dann eine erneute Zunahme und schließlich eine weitere Abnahme des Messsignals statt. Die Auswertung des Messsignals des Gassensors ist also relativ schwierig.

Aus US 6 155 100 ist ferner ein gattungsfremder Gassensor bekannt. Dieser hat auf einem Halbleitersubstrat eine Siliziumdioxid-Isolationsschicht, auf der eine gassensitive Schicht angeordnet ist. Auf der gassensitive Schicht ist eine Beschichtung angeordnet, die aus Polyfluortetraethylen besteht. Die Beschichtung haftet an der gassensitiven Schicht und ist für mit dem Gassensor zu detektierendes Wasserstoff-Gas durchlässig. Die Beschichtung soll den Durchtritt von Fremdsubstanzen reduzieren.

Bei diesem Gassensor findet der eigentliche Detektionsvorgang an einer vergrabenen Grenzfläche statt; die zwischen der gassensitiven Schicht und der Isolationsschicht angeordnet ist. Das zu detektierende Wasserstoff-Gas muss also durch die Beschichtung und die gassensitive Schicht hindurch diffundieren, um zu der Grenzfläche zu gelangen. Der Gassensor weist deshalb noch vergleichsweise große Ansprechzeiten auf Die gassensitive Schicht besteht aus Metall und bildet für Sauerstoff eine Diffusionsbarriere.

Aus der WO 2005 / 075969 A1 ist ein weiterer Gassensor bekannt. Auf der Nitridschicht des Gates wird mittels einer Silanisierung versucht, die Restleitfähigkeit der Nitridschicht in einer humiden Umgebung zu verringern.

Es besteht deshalb die Aufgabe, einen Gassensor der eingangs genannten Art zu schaffen, bei dem das Messsignal im Wesentlichen der Änderung der Zielgaskonzentration entspricht.

Diese Aufgabe wird mit den Merkmalen des Anspruchs 1 gelöst.

Der Erfindung liegt die Erkenntnis zu Grunde, dass bei einer unbeschichteten gassensitiven Schicht bei einer Zunahme der Konzentration des Zielgases eine Adsorption des Zielgases an dem Oberflächenbereich der gassensitiven Schicht stattfindet und dass während der dadurch hervorgerufenen Oberflächen-Austrittsarbeitsänderung außerdem der Oberflächenbereich der gassensitiven Schicht durch das Zielgas verändert werden kann, beispielsweise durch chemische Reaktionen an der Oberfläche oder dadurch, dass das Zielgas an die Oberfläche der gassensitiven Schicht gebundene andere Atome und/oder Moleküle bei der Adsorption an die Oberfläche verdrängt. Durch diese Effekte kann sich die Austrittsarbeit in die zu der durch die Adsorption bewirkte Änderung entgegengesetzte Richtung verändern. Die Veränderung der Oberfläche kann je nach Temperatur der gassensitiven Schicht über Stunden (z.B. bei Raumtemperatur) oder Sekunden (z.B. bei 70 °C) stattfinden und so das durch die Adsorption verursachte Messsignal stark stören. Diese Störung tritt insbesondere dann auf, wenn der Oberflächenbereich der gassensitiven Schicht längere Zeit nicht mit dem Zielgas in Kontakt gestanden hat.

Überraschenderweise kann das durch die Veränderung der Oberfläche verursachte Störsignal durch die erfindungsgemäße, auf die gassensitive Schicht aufgebrachte Beschichtung reduziert oder sogar völlig unterdrückt werden. In entsprechender Weise wird durch die Beschichtung auch bei einer Abnahme der Zielgaskonzentration das Störsignal zumindest teilweise kompensiert. Die Beschichtung dient also als Passivierungsschicht, die den Oberflächenbereich der gassensitiven Schicht stabilisiert. Das Messsignal des Gassensors lässt sich dadurch wesentlich leichter auswerten, als dies bei einem entsprechenden Gassensor der Fall wäre, der die Beschichtung nicht aufweist. Unter einer elektrisch isolierenden Beschichtung wird eine Beschichtung verstanden, deren elektrische Leitfähigkeit derart gering ist, dass die Beschichtung keine die gassensitive Schicht gegen den Luftspalt abschirmende Äquipotentialfläche bildet.

Bei der Erfindung ist die Beschichtung derart ausgestaltet, dass sie die Bindung eines sich von dem Zielgas unterscheidenden elektronegativen Gases, insbesondere von Sauerstoff, an den Oberflächenbereich der gassensitiven Schicht verhindert oder zumindest erschwert. Der zur Adsorption des zu detektierenden Gases vorgesehene Oberflächenbereich der gassensitiven Schicht kann dann durch die Beschichtung insbesondere gegen den Zutritt von Luftsauerstoff stabilisiert werden. Die Beschichtung wird bei der Fertigung des Gassensors vorzugsweise während oder unmittelbar nach der Herstellung der gassensitiven Schicht auf dieser angeordnet, so dass die gassensitive Schicht von Anfang an gegen in der Atmosphäre befindlichen Sauerstoff und somit gegen eine Änderung des Oxidationszustands ihrer Oberfläche geschützt ist.

Zweckmäßigerweise ist die Beschichtung eine monomolekulare Schicht. Das Zielgas kann dann besonders gut durch die Beschichtung hindurch zu der Oberfläche der gassensitiven Schicht gelangen.

Vorteilhaft ist, wenn das Silan ein Silizium-Atom aufweist, das an mindestens ein elektronegatives Gasatom, vorzugsweise Chlor gebunden ist. Die Beschichtung haftet dann gut an der Oberfläche der gassensitiven Schicht, so dass diese dauerhaft passiviert ist. Zum Herstellen der Beschichtung wird das Silan vorzugsweise nasschemisch auf die gassensitive Schicht aufgebracht. Das Silan ist insbesondere ein Organotrichlorsilan.

Das Silan weist bevorzugt mindestens eine organische Restgruppe auf. Durch die Restgruppe kann bei der Herstellung des Gassensors das Aufbringen der Beschichtung auf die gassensitive Schicht erleichtert werden, indem das Silan beispielsweise in flüssiger Form auf die Beschichtung aufgetragen wird, beispielsweise durch ein nasschemisches Tauchverfahren.

Bei einer bevorzugten Ausgestaltung der Erfindung besteht die gassensitive Schicht aus Platin oder Palladium. Der Gassensor weist dann für das Zielgas Wasserstoff eine hohe Detektionsempfindlichkeit auf

Bei einer andern Ausführungsform der Erfindung ist die gassensitive Schicht eine organische Schicht. Der Gassensor ist dann kostengünstig herstellbar.

Der Potentialsensor ist vorzugsweise ein Feldeffekttransistor, der ein Substrat aufweist auf dem eine Drain und eine Source angeordnet sind, wobei zwischen Drain und Source ein Kanalbereich gebildet ist, und wobei der Kanalbereich direkt über den Luftspalt oder indirekt über eine mit dem Kanalbereich zusammenwirkende Gateelektrode und eine mit der Gateelektrode leitend verbundene Sensorelektrode kapazitiv an den Oberflächenbereich der gassensitiven Schicht gekoppelt ist. Der Feldeffekttransistor kann also ein SGFET oder ein CCFET sein. Der Gassensor ermöglicht dadurch eine kompakte Bauform und lässt sich außerdem gut in einen Halbleiterchip integrieren. Dabei kann in den Halbleiterchip auch eine Auswerteeinrichtung zur Verarbeitung der Messsignale des Gassensors integriert sein.

Bei einer anderen vorteilhaften Ausgestaltung der Erfindung ist der Gassensor als Kelvinsonde ausgestaltet, bei welcher der Potentialsensor über eine durch den Luftspalt von dem Oberflächenbereich der gassensitiven Schicht beabstandete, auf die gassensitive Schicht zu- und von dieser wegbewegbaren Elektrode kapazitiv an den Oberflächenbereich der gassensitiven Schicht gekoppelt ist. Dabei kann die Elektrode beispielsweise mittels eines Piezo-Aktors relativ zu der gassensitiven Schicht positioniert und In Schwingungen versetzt werden. Der Potentialsensor ist einer Auswerte- und Ansteuereinrichtung zugeordnet, die eine Gegenspannung an die Elektrode anlegt, die derart gewählt ist, dass das von dem Potentialsensor gemessene Potential im Mittel gleich null ist. Die Gegenspannung ist ein Maß für die Konzentration des mit dem Oberflächenbereich der gassensitiven Schicht in Kontakt stehenden Zielgases.

Nachfolgend sind Ausführungsbeispiele der Erfindung anhand der Zeichnung näher erläutert. Es zeigt:
- Fig. 1: einen Querschnitt durch einen Gassensor, der einen SGFET aufweist, dessen Kanalbereich über einen Luftspalt kapazitiv an eine mit einer Passivierungs-Beschichtung versehene gassensitive Schicht gekoppelt ist,
- Fig. 2: einen Querschnitt durch einen Gassensor, der einen CCFET aufweist, dessen Sensorelektrode über einen Luftspalt kapazitiv an eine mit einer Passivierungs-Beschichtung versehene gassensitive Schicht gekoppelt ist,
- Fig. 3: einen Querschnitt durch einen als Kelvinsonde ausgestalteten Gassensor, bei dem die gassensitive Schicht eine Passivierungs-Beschichtung aufweist,
- Fig. 4: eine schematische Darstellung eines In der Beschichtung enthaltenen Silan-Moleküls, das über eine Sauerstoffbrücke an die gassensitive Schicht gebunden ist,
- Fig.5: eine graphische Darstellung des Messsignals (obere Kurve) und der Zielgaskonzentration (untere Kurve) eines Gassensors, bei dem die gas-sensitive Schicht die erfindungsgemäße Beschichtung aufweist, wobei auf der Abszisse die Zeit t und auf der Ordinate links die Amplitude S des Messsignals und rechts die Zielgoskonzentration k aufgetragen sind, und
- Fig. 6: eine graphische Darstellung ähnlich Fig. 5, wobei jedoch das Messsignal mit einem aus dem Stand der Technik bekannten Wasserstoff-Sensor mit unbeschichteter gassensitiver Schicht gemessen wurde.

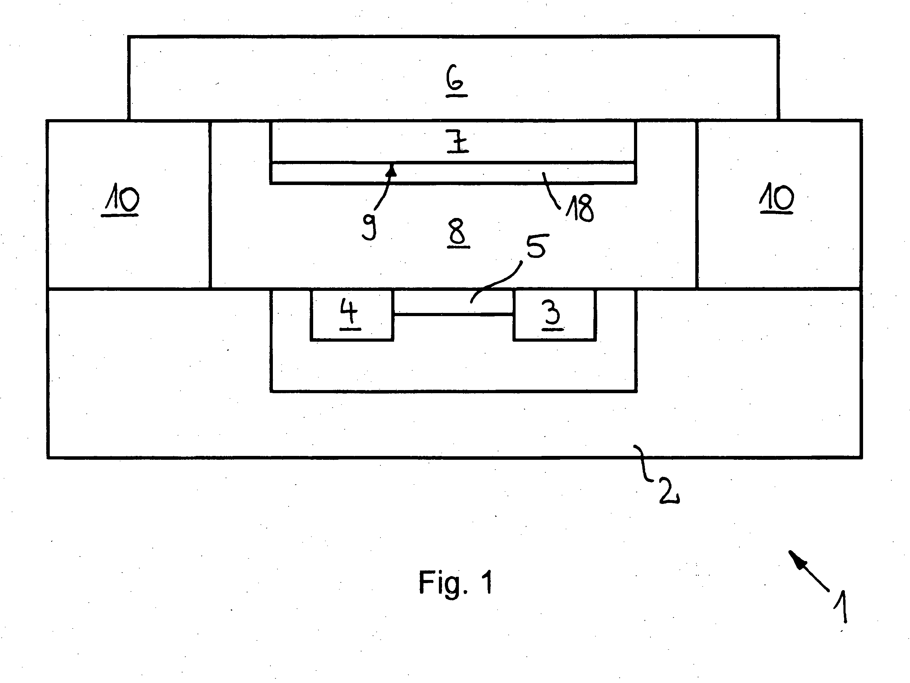

Ein In Fig. 1 im Ganzen mit 1 bezeichneter Gassensor weist ein Substrat 2 auf, auf dem in einer n-dotierten Transistorwanne eine Drain 3 und eine Source 4 angeordnet ist. Die Drain 3 und die Source 4 können beispielsweise aus p-dotlertem Silizium bestehen. Die Drain 3 ist über elektrische Leiterbahnen mit einem in der Zeichnung nicht näher dargestellten Drain-Anschluss verbunden. In entsprechender Weise ist die Source 4 mit einem Source-Anschluss verbunden. Zwischen Drain 3 und Source 4 ist in dem Substrat 2 ein Kanalbereich 5 gebildet, auf dem eine elektrisch isolierende Dünnoxidschicht angeordnet ist, die als Gatedielektrikum dient.

Über dem Kanalbereich 5 ist an einem Trägerteil 6 eine gassensitive Schicht 7 angeordnet, die beispielsweise aus einem Edelmetall, Insbesondere aus Platin oder Palladium besteht und durch einen Luftspalt 8 von dem Kanalbereich 5 beabstandet ist. Ein dem Kanalbereich 5 zugewandter Oberflächenbereich 9 der gassensitive Schicht 7 und über den Luftspalt 8 kapazitiv an den dem Kanalbereich 5 gekoppelt.

Das Trägerteil 7 ist beidseits der gassensitiven Schicht 7 über eine elektrische Isolationsschicht 9 mit dem Substrat 2 verbunden. In Fig. 1 ist deutlich erkennbar, dass das Trägerteil 6 und die gassensitive Schicht 7 ein Suspended Gate bilden.

Der Luftspalt 4 ist über mindestens eine in der Zeichnung nicht näher dargestellte Öffnung mit der den Gassensor 1 umgebenden Atmosphäre verbunden. Über diese Öffnung kann der Oberflächenbereich 9 der gassensitiven Schicht 7 mit einem zu detektierenden Zielgas, nämlich Wasserstoff, in Kontakt gebracht werden. Bei einem Kontakt mit dem Oberflächenbereich 9 adsorbiert das Zielgas an dem Oberflächenbereich 9. Dabei verändert sich in dem Oberflächenbereich 9 die Austrittsarbeit, was in einer Veränderung des elektrischen Potentials In dem Kanalbereich 5 führt.

Bei dem Ausführungsbeispiel nach Fig. 1 ist der Kanalbereich 5 offen ausgebildet (ISFET) und über das Dünnschichtoxid und den Luftspatt 8 direkt an die gassensitive Schicht 7 kapazitiv gekoppelt. Deutlich ist erkennbar, dass der Kanalbereich 5 an der der gassensitiven Schicht 7 gegenüberliegenden Seite des Luftspalts 8 angeordnet ist.

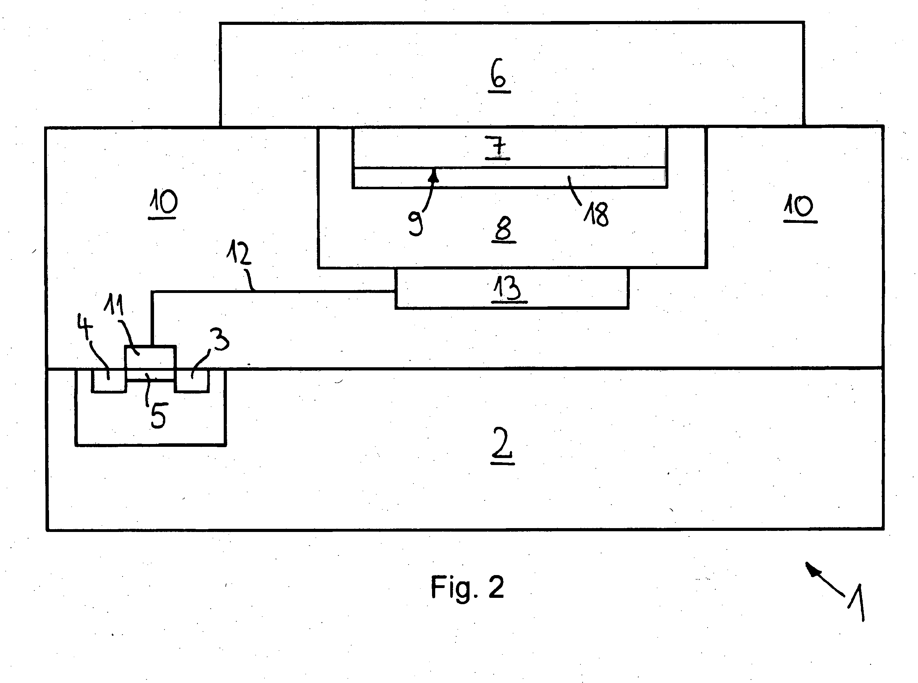

Bei dem Ausführungsbeispiel nach Flg. 2 ist der Feldeffekttransistor als SGFET ausgestaltet, bei dem der Kanalbereich 5 seitlich neben der gassensitiven Schicht 7 in dem Substrat 2 angeordnet und mit einer Gateelektrode 11 abgedeckt ist. Zur kapazitiven Ankopplung des Kanalbereichs 5 an die gassensitive Schicht 10 ist die Gateelektrode 11 über eine elektrische Verbindungsleitung 12 mit einer Sensorelektrode 13 verbunden, die an der dem Oberflächenbereich 9 der gassensitiven Schicht 7 gegenüberliegenden Seite des Luftspalts 8 auf einer auf dem Substrat 2 befindlichen Isolationsschicht 10 angeordnet ist. Die Isolationsschicht 10 kann beispielsweise eine SiO₂-Schicht sein. Der Aufbau des Suspended Gates des SGFET entspricht dem in Fig. 1.

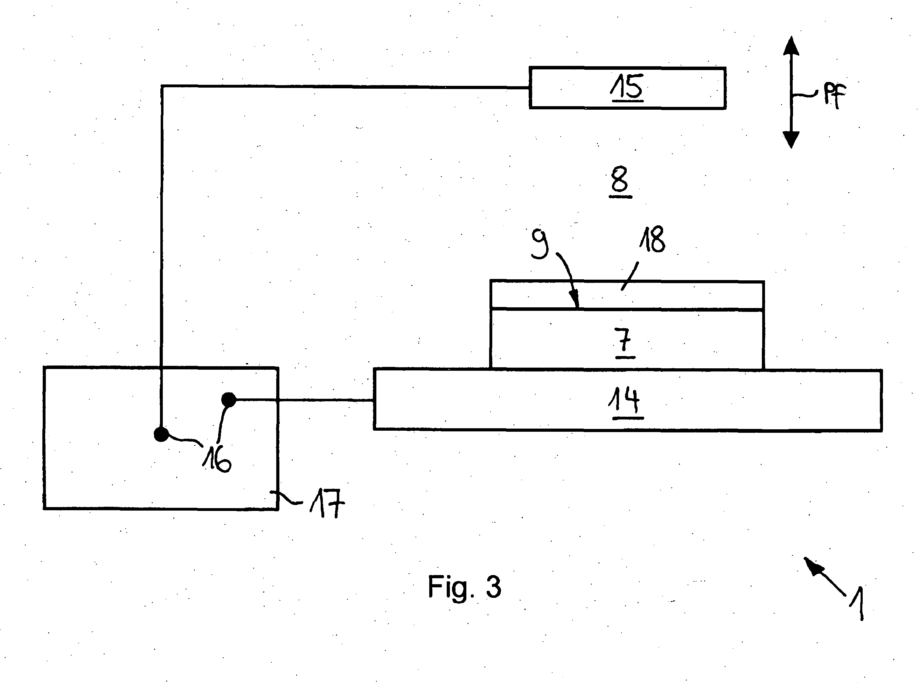

Bei dem in Fig. 3 gezeigten Ausführungsbeispiel ist der Gassensor 1 als KelvinSonde ausgestaltet. Die gassensitive Schicht 7 ist auf einem elektrisch leitenden Träger 14 angeordnet und weist an ihrer dem Träger 14 abgewandten Seite einen Oberflächenbereich 9 auf, an den das Zielgas adsorbieren kann. Der Oberflächenbereich 9 ist durch einen Luftspalt 8 von einer Elektrode 15 beabstandet und bildet mit dieser eine elektrische Kapazität.

Die Elektrode 15 kann mit Hilfe eines in der Zeichnung nicht näher dargestellten Aktors in Schwingungen versetzt werden. Dabei bewegt sich die Elektrode 15 entsprechend dem Pfeil Pf abwechselnd auf die gassensitive Schicht 7 zu- und von dieser weg. Die Elektrode 15 und der Träger 14 bzw. die gassensitive Schicht 7 sind mit Anschlüssen 16 einer Auswerte- und Ansteuereinrichtung 17 verbunden. Diese hat einen in der Zeichnung nicht näher dargestellten Potentialsensor, der zur Messung der elektrischen Spannung zwischen der gassensitiven Schicht 7 und der Elektrode 15 mit den Anschlüssen 16 verbunden ist. Die Auswerte- und Ansteuereinrichtung 17 weist außerdem eine mit dem Potentialsensor in Steuerverbindung stehende, verstellbare Spannungsquelle auf, mittels der eine Gegenspannung zwischen den Potentialsensor und die Elektrode 15 und/oder den Träger 15 anlegt wird. Die Gegenspannung wird so gewählt, dass das von dem Potentialsensor gemessene Potential im Mittel gleich null ist.

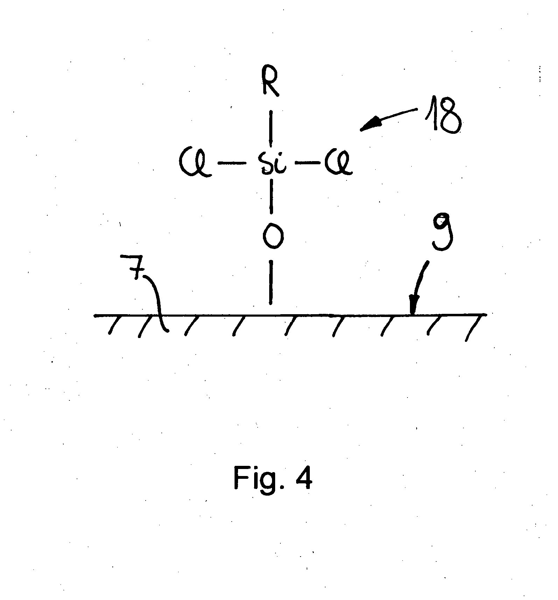

Bei den vorstehend beschriebenen Ausführungsbeispielen des Gassensors 1 Ist jeweils der Oberflächenbereich 9 der gassensitiven Schichten 7 von einer für das Zielgas inerten, elektrisch isolierenden Beschichtung 18 überdeckt. Wie in Fig. 4 erkennbar ist, handelt es sich bei der Beschichtung 18 um eine monomolekulare Schicht aus Silanen, die über Sauerstoffbrücken an den Oberflächenbereich 9 der gassensitiven Schichten 7 gebunden sind und an diese anhaften. Die Silane haben eine organische Restgruppe, die in Fig. 4 mit R bezeichnet ist.

Die Beschichtung 18 ist für das Zielgas durchlässig. Die Beschichtung 18 verhindert oder erschwert eine chemische Reaktion des Zielgases mit der Oberfläche 9, beispielsweise mit dem an der Oberfläche 9 befindlichen Sauerstoff. Die Beschichtung 18 verhindert oder erschwert die Reaktion oder Bindung von in der die gassensitive Schicht 7 umgebenden Luft enthaltenem Sauerstoff an den Oberflächenbereich 9 der gassensitiven Schicht 7. Die Beschichtung 18 stabilisiert dadurch die Oberfläche der gassensitiven Schicht 7.

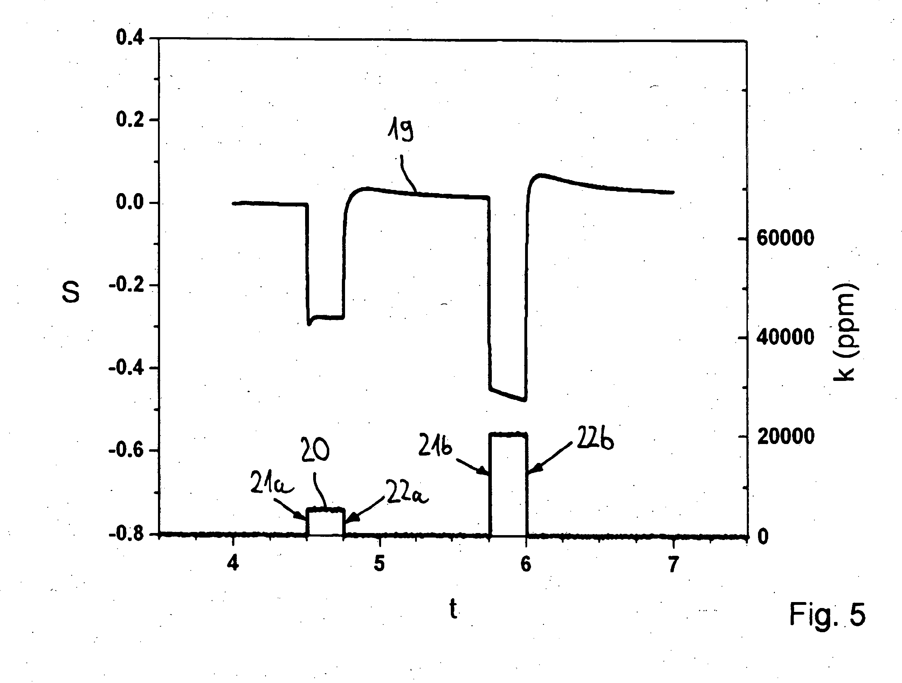

Durch die Beschichtung 18 wird erreicht, dass das Sensorsignal 19 des Gassensors 1 im Wesentlichen der Zielgaskonzentration 20 entspricht. In Fig. 5 ist deutlich erkennbar, dass das Sensorsignal 19 bei einem eine ansteigende Flanke 21a, 21 b und eine abfallende Flanke 22a, 22b aufweisenden rechteckförmigen Verlauf der Zielgas-Konzentration 20 bei der ansteigenden Flanke 21 a, 21 b steil abnimmt und bei der darauf folgenden abfallenden 22a, 22b Flanke etwa wieder auf das Niveau, welches das Sensorsignal 19 vor dem Anstieg der Zielgaskonzentrafion 20 hatte, steil zunimmt. Zwischen der ansteigenden Flanke 21 a, 21 b und der abfallenden Flanke 22a, 22b ist die Zlelgaskonzentration 20 konstant. Das Sensorsignal 19 hat zwischen der ansteigenden Flanke 21a, 21 b und der abfallenden Flanke 22a, 22b einen näherungsweise konstanten Verlauf Außerdem ist erkennbar, dass die Abnahme des Sensorsignals 19 bei einer geringen Zunahme (In Fig. 5 links) der Zielgaskonzentration 20 kleiner ist als bei einer größeren Zunahme der Zielgaskonzentration 20 (in Fig. 5 rechts).

Im Vergleich dazu ist in Fig. 6 der Verlauf des Messsignals 23 für einen entsprechenden Gassensor abgebildet, der die erfindungsgemäße Beschichtung 18 nicht aufweist. Deutlich ist erkennbar, dass das Messsignal 23 während der beiden unterschiedlich hohen rechteckförmigen Verläufe der Zielgas-Konzentration 20 erheblich gestört ist und gegenüber dem ursprünglichen Niveau einmal nach unten und zweimal nach oben ausschlägt. Die Auswertung des Messsignals 23 des aus dem Stand der Technik bekannten Gassensors ist also wesentlich aufwändiger als bei dem erfindungsgemäßen Gassensor 1.

## Patentansprüche

1. Gassensor (1) mit mindestens einer gassensitiven Schicht (7), die wenigstens einen Oberflächenbereich (9) aufweist, in dem die Austrittsarbeit von der Konzentration eines mit dem Oberflächenbereich (9) in Kontakt bringbaren Zielgases abhängig ist, und mit zumindest einem über einen Luftspalt (8) kapazitiv an den Oberflächenbereich (9) gekoppelten elektrischen Potentialsensor, **dadurch gekennzeichnet dass** der Oberflächenbereich (9) der gassensitiven Schicht (7) von einer für das Zielgas inerten, elektrisch isolierenden, ein Silan enthaltenden Beschichtung (1 8) überdeckt ist, die haftend mit der gassensitiven Schicht (7) verbundenen und derart ausgestaltet ist, dass sie für das Zielgas durchlässig ist und dass sie bei einem Kontakt des Zielgases mit dem Oberflächenbereich (9) der gassensitiven Schicht (7) eine Veränderung des Bindungszustands von an den Oberflächenbereich (9) gebundenen, sich vom Zielgas unterscheidenden Atomen und/oder Molekülen, verhindert oder zumindest erschwert.

2. Gassensor (1) nach Anspruch 1, **dadurch gekennzeichnet, dass** die Beschichtung (18) über Sauerstoffbrücken an den Oberflächenbereich (9) der gassensitiven Schicht (7) gebunden ist.

3. Gassensor (1) nach Anspruch 1 oder 2, **dadurch gekennzeichnet, dass** das Silan ein Silizium-Atom aufweist, das an mindestens ein elektronegatives Gasatom gebunden ist.

4. Gassensor (1) nach Anspruch 3, **dadurch gekennzeichnet, dass** das elektronegative Gasatom Chlor ist.

5. Gassensor (1) nach einem der Ansprüche 1 bis 4, **dadurch gekennzeichnet, dass** die Beschichtung (18) eine monomolekulare Schicht ist.

6. Gassensor (1) nach einem der Ansprüche 1 bis 5, **dadurch gekennzeichnet, dass** das Silan mindestens eine organische Restgruppe aufweist.

7. Gassensor (1) nach einem der Ansprüche 1 bis 6, **dadurch gekennzeichnet, dass** die gassensitive Schicht (7) aus Platin oder Palladium besteht.

8. Gassensor (1) nach einem der Ansprüche 1 bis 7, **dadurch gekennzeichnet, dass** das Zielgas ein reduzierendes Gas ist, insbesondere Wasserstoff.

9. Gassensor (1) nach einem der Ansprüche 1 bis 8, **dadurch gekennzeichnet, dass** der Potentialsensor ein Feldeffekttransistor ist, der ein Substrat (2) aufweist auf dem eine Drain (3) und eine source (4) angeordnet sind, dass zwischen Drain (3) und Source (4) ein Kanalbereich (5) gebildet ist, und dass der Kanalbereich (5) direkt über den Luftspalt (8) oder indirekt über eine mit dem Kanalbereich (5) zusammenwirkende Gateelektrode (11) und eine mit der Gateelektrode (11) leitend verbundene Sensorelektrode (1 3) kapazitiv an den Oberflächenbereich (9) der gassensitiven Schicht (7) gekoppelt ist.

10. Gassensor (1) nach einem der Ansprüche 1 bis 9, **dadurch gekennzeichnet, dass** er als Kelvinsonde ausgestaltet ist, bei welcher der Potentialsensor über eine durch den Luftspalt (8) von dem Oberflächenbereich (9) der gassensitiven Schicht (7) beabstandete, auf die gassensitive Schicht (7) zu- und von dieser wegbewegbaren Elektrode (15) kapazitiv an den Oberflächenbereich (9) der gassensitiven Schicht (7) gekoppelt ist.

## Claims

1. Gas sensor (1) with at least one gas-sensitive layer (7) having at least one surface region (9) in which the work function is dependent on the concentration of an objective gas able to be brought into contact with the surface region (9), and with at least one electrical potential sensor capacitively coupled to the surface region (9) by way of an air gap (8), **characterised in that** the surface region (9) of the gas-sensitive layer (7) is covered by an electrically insulating coating (18), which is inert with respect to the objective gas and includes a silane and which is adhesively connected with the gas-sensitive layer (7) and so formed that it is permeable to the objective gas and that when contact of the objective gas with the surface region (9) of the gas-sensitive layer (7) occurs it prevents or at least hampers change in the bond state of atoms and/or molecules bonded to the surface region (9) and differing from the objective gas.

2. Gas sensor (1) according to claim 1, **characterised in that** the coating (18) is bonded to the surface region (9) of the gas-sensitive layer (7) by way of oxygen bridges.

3. Gas sensor (1) according to claim 1 or 2, **characterised in that** the silane comprises a silicon atom bonded to at least one electronegative gas atom.

4. Gas sensor (1) according to claim 3, **characterised in that** the electronegative gas atom is chlorine.

5. Gas sensor (1) according to any one of claims 1 to 4, **characterised in that** the coating (18) is a monomolecular layer.

6. Gas sensor (1) according to any one of claims 1 to 5, **characterised in that** the silane comprises at least one organic residual group.

7. Gas sensor (1) according to any one of claims 1 to 6, **characterised in that** the gassensitive layer (7) consists of platinum or palladium.

8. Gas sensor (1) according to any one of claims 1 to 7, **characterised in that** the objective gas is a reducing gas, particularly hydrogen.

9. Gas sensor (1) according to any one of claims 1 to 8, **characterised in that** the potential sensor is a field effect transistor comprising a substrate (2) on which a drain (3) and a source (4) are arranged, that a channel region (5) is formed between drain (3) and source (4) and that the channel region (5) is capacitively coupled to the surface region (9) of the gas-sensitive layer (7) directly by way of the air gap (8) or indirectly by way of a gate electrode (11) co-operating with a channel region (5) and a sensor electrode (13) conductively connected with the gate electrode (11).

10. Gas sensor (1) according to any one of claims 1 to 9, **characterised in that** it is constructed as a Kelvin probe, in which the potential sensor is capacitively coupled to the surface region (9) of the gas-sensitive layer (7) by way of an electrode (15), which is spaced from the surface region (9) of the gas-sensitive layer (7) by the air gap (8) and which is movable on the gas-sensitive layer (7) towards and away from this.

## Revendications

1. Capteur de gaz (1) avec au moins une couche sensible au gaz (7), qui présente au moins une zone de surface (9), dans laquelle le travail de sortie dépend de la concentration d'un gaz cible pouvant être mis en contact avec la zone de surface (9), et avec au moins un détecteur de potentiel électrique couplé de façon capacitive à la zone de surface (9) par l'intermédiaire d'un entrefer (8), **caractérisé en ce que** la zone de surface (9) de la couche sensible au gaz (7) est recouverte d'un revêtement (18) inerte à l'égard du gaz cible, électriquement isolant et contenant un silane, qui est assemblé par adhérence à la couche sensible au gaz (7) et qui est conçu de telle manière qu'il soit perméable au gaz cible et que, lors d'un contact du gaz cible avec la zone de surface (9) de la couche sensible au gaz (7), il empêche ou au moins qu'il rende difficile un changement de l'état de liaison d'atomes et/ou de molécules se différenciant du gaz cible et lié(e)s à la zone de surface (9).

2. Capteur de gaz (1) selon la revendication 1, **caractérisé en ce que** le revêtement (18) est lié à la zone de surface (9) de la couche sensible au gaz (7) par des ponts d'oxygène.

3. Capteur de gaz (1) selon la revendication 1 ou 2, **caractérisé en ce que** le silane présente un atome de silicium, qui est lié à au moins un atome gazeux électronégatif.

4. Capteur de gaz (1) selon la revendication 3, **caractérisé en ce que** l'atome gazeux électronégatif est le chlore.

5. Capteur de gaz (1) selon l'une quelconque des revendications 1 à 4, **caractérisé en ce que** le revêtement (18) est une couche monomoléculaire.

6. Capteur de gaz (1) selon l'une quelconque des revendications 1 à 5, **caractérisé en ce que** le silane présente au moins un groupe résiduel organique.

7. Capteur de gaz (1) selon l'une quelconque des revendications 1 à 6, **caractérisé en ce que** la couche sensible au gaz (7) se compose de platine ou de palladium.

8. Capteur de gaz (1) selon l'une quelconque des revendications 1 à 7, **caractérisé en ce que** le gaz cible est un gaz réducteur, en particulier l'hydrogène.

9. Capteur de gaz (1) selon l'une quelconque des revendications 1 à 8, **caractérisé en ce que** le détecteur de potentiel est un transistor à effet de champ, qui présente un substrat (2) sur lequel sont disposés un drain (3) et une source (4) **en ce qu'**une zone de canal (5) est formée entre le drain (3) et la source (4), et **en ce que** la zone de canal (5) est couplée de façon capacitive à la zone de surface (9) de la couche sensible au gaz (7), directement par l'intermédiaire de l'entrefer (8) ou indirectement par l'intermédiaire d'une électrode de grille (11) coopérant avec la zone de canal (5) et une électrode de capteur (13) reliée de façon conductrice à l'électrode de grille (11).

10. Capteur de gaz (1) selon l'une quelconque des revendications 1 à 9, **caractérisé en ce qu'**il est conçu comme une sonde de Kelvin, dans laquelle le détecteur de potentiel est couplé de façon capacitive à la zone de surface (9) de la couche sensible au gaz (7) par l'intermédiaire d'une électrode (15) espacée de la zone de surface (9) de la couche sensible au gaz (7) par l'entrefer (8) et pouvant être approchée de la couche sensible au gaz (7) et écartée de celle-ci.
